# EUROPEAN PATENT APPLICATION

(11) **EP 4 838 914 A1**
(43) Date of publication of application: **11.11.2026**
(21) Application number: 24930595.4
(22) Date of filing: 27.12.2024
(51) Int. Cl.: H04W 4/90, H04W 4/02, H04W 4/40, H04W 4/80

(54) **EMERGENCY CALLING METHOD, TRAFFIC VEHICLE DEVICE, MOBILE TERMINAL DEVICE, AND STORAGE MEDIUM**

(30) Priority: 22.03.2024 CN 202410341305
(71) Applicant: ZTE Corporation, Shenzhen, Guangdong 518057 (CN)
(72) Inventor: CHEN, Xiao, Shenzhen, Guangdong 518057 (CN)
(74) Representative: Ziebig Hengelhaupt Intellectual Property Attorneys Patentanwaltskanzlei PartGmbB
(86) International application number: PCT/CN2024/143076
(87) International publication number: WO 2025/194939

(57) **Abstract**

Provided are an emergency calling method, a traffic vehicle device, a mobile terminal device, and a storage medium. The emergency calling method comprises: receiving a first emergency call message from a second device, the first emergency call message being a direct communication message and carrying emergency rescue request information of the second device, and sending a second emergency call to a third device, the second emergency call being sent by means of a terrestrial public communication network, a terrestrial dedicated communication network or a non-terrestrial communication network, and carrying the emergency rescue request information.

## Description

The present disclosure claims a priority to Chinese Patent Application No. 202410341305.2, and filed on March 22, 2024, the entire content of which is incorporated herein by reference.

### TECHNICAL FIELD

The present disclosure relates to the field of communication technologies, and in particular, to an emergency call method, a transport vehicle device, a mobile terminal device, and a storage medium.

### BACKGROUND

Emergency call refers to a process of making an emergency call to a nearby public safety answering point (PSAP) in a critical situation to request rescue. For example, a user makes an emergency call through the transport vehicle device when an accident occurs on the vehicle. Taking an example in which a transport vehicle is a vehicle, an emergency call (eCall) may be made through a vehicle emergency call system. In yet another example, when an accident occurs, a user may make an emergency call through a carried mobile terminal device.

### SUMMARY

In a first aspect, the embodiments of the present disclosure provide an emergency call method, applied to a first device. The emergency call method includes:
receiving a first emergency call message from a second device, where the first emergency call message is a direct communication message and carries emergency rescue request information of the second device; and
sending a second emergency call to a third device, where the second emergency call is sent through a terrestrial public communication network, a terrestrial private communication network, or a non-terrestrial communication network, and carries the emergency rescue request information.

In a second aspect, the embodiments of the present disclosure provide another emergency call method, applied to a second device. The emergency call method includes:
in a case where an emergency call service of the second device is triggered, detecting a communication network connection of the second device; and
in a case where the second device is incapable of accessing an emergency call service, sending a first emergency call message; where the first emergency call message is a direct communication message and carries emergency rescue request information of the second device.

In a third aspect, the embodiments of the present disclosure provide an emergency call apparatus. The emergency call apparatus includes: a receiving module and a sending module;
the receiving module, configured to receive a first emergency call message from a second device, where the first emergency call message is a direct communication message and carries emergency rescue request information of the second device; and
the sending module, configured to send a second emergency call to a third device, where the second emergency call is sent through a terrestrial public communication network, a terrestrial private communication network, or a non-terrestrial communication network, and carries the emergency rescue request information.

In a fourth aspect, the embodiments of the present disclosure provide another emergency call apparatus. The emergency call apparatus includes: a detection module and a sending module;
the detection module, configured to, in a case where an emergency call service of the second device is triggered, detect a communication network connection of the second device; and
the sending module, configured to, in a case where the second device is incapable of accessing an emergency call service, send a first emergency call message; where the first emergency call message is a direct communication message and carries emergency rescue request information of the second device.

In a fifth aspect, the embodiments of the present disclosure provide a transport vehicle device, where the transport vehicle device has a C-V2X direct communication module and/or a DSRC direct communication module, and the transport vehicle device is configured to perform the emergency call method according to the first aspect or the second aspect.

In a sixth aspect, the embodiments of the present disclosure provide a mobile terminal device, where the mobile terminal device has a C-V2X direct communication module and/or a DSRC direct communication module, and the transport vehicle device is configured to perform the emergency call method according to the first aspect or the second aspect.

In a sixth aspect, the embodiments of the present disclosure provide a roadside device, where the roadside device has a C-V2X direct communication module and/or a DSRC direct communication module, and the roadside device is configured to perform the emergency call method according to the first aspect or the second aspect.

In a seventh aspect, the embodiments of the present disclosure provide a computer readable storage medium, and the computer readable storage medium has a computer program stored thereon, and the computer program, upon being executed by a processor, implements the emergency call method according to the first aspect or the second aspect.

In an eighth aspect, the embodiments of the present disclosure provide a computer program product containing computer instructions, and the computer instructions, upon being executed by a processor, implements the emergency call method according to the first aspect or the second aspect.

### BRIEF DESCRIPTION OF THE DRAWINGS

FIG. 1 is a schematic diagram of an IP multimedia subsystem emergency call system based on 4G network and 5G network according to some embodiments.
FIG. 2 is a schematic diagram of an emergency call system according to some embodiments.
FIG. 3A is a schematic diagram of another emergency call system according to some embodiments.
FIG. 3B is a schematic diagram of yet another emergency call system according to some embodiments.
FIG. 4 is a flow chart of an emergency call method according to some embodiments.
FIG. 5 is a schematic diagram of an emergency call scenario according to some embodiments.
FIG. 6 is a schematic diagram of another emergency call scenario according to some embodiments.
FIG. 7 is a schematic diagram of yet another emergency call scenario according to some embodiments.
FIG. 8 is a schematic diagram of yet another emergency call scenario according to some embodiments.
FIG. 9 is a flow chart of another emergency call method according to some embodiments.
FIG. 10 is a schematic diagram of components of an emergency call apparatus according to some embodiments.
FIG. 11 is a schematic diagram of components of another emergency call apparatus according to some embodiments.
FIG. 12 is a structural schematic diagram of an emergency call apparatus according to some embodiments.

### DETAILED DESCRIPTION

The technical solutions in the embodiments of the present disclosure will be described clearly and completely below in conjunction with the drawings in the embodiments of the present disclosure. Obviously, the described embodiments are only a part of the embodiments of the present disclosure, not all of the embodiments. Based on the embodiments in the present disclosure, all other embodiments obtained by those ordinary skilled without creative efforts shall fall within the protection scope of the present disclosure.

In the description of the present disclosure, unless otherwise specified, the symbol "/" means "or", and for example, "A/B" may represent A or B. Herein, "and/or" is only used to describe an associated relationship between associated objects, representing that there may be three kinds of relationships, and for example, A and/or B may represent: only A, A and B, and only B. In addition, "at least one" means one or more, and the "multiple/plurality of" means two or more. Expressions, such as "first" and "second", etc., do not limit the number and execution order, and the expressions, such as "first" and "second", etc., also do not necessarily limit different items.

It should be noted that, in the present disclosure, the expressions such as "exemplary/exemplarily" or "for example" are used to present an example, illustration, or explanation. Any embodiment or design scheme described with "exemplary/exemplarily" or "for example" in the present disclosure should not be construed as preferred or advantageous over other embodiments or design schemes. Rather, the usage of the expressions, such as "exemplary /exemplarily" or "for example", etc., is intended to present relevant concepts in a detailed manner.

Currently, emergency call services generally require the support of a terrestrial public communication network. Taking an example in which a user makes an emergency call system through the eCall system of a vehicle when an accident occurs on the vehicle, the eCall system requires to make an emergency call through the terrestrial public communication network. The eCall system is a system for vehicles to automatically or manually call a rescue dispatch platform center in emergency situations. The eCall system may be triggered automatically. In a case of a collision or rollover accident of the vehicle, sensors or fault detection components within the vehicle enable the eCall system to be automatically triggered, thereby connecting to the PLMN to establish contact with a public safety answering point (PSAP) and upload relevant rescue information of the vehicle to request rescue. Of course, the eCall system may also be triggered manually, for example, by starting the eCall system through an eCall button or voice call in the vehicle, so that the eCall system completes the process of uploading relevant rescue information of the vehicle to request rescue. Combining mobile phone and satellite positioning (or other possible positioning methods) functions, the eCall system may be capable of quickly transmitting key rescue information such as the location of the accident, information of the accident vehicle, and accident time information, thereby improving rescue speed and reducing casualties caused by traffic accidents.

In addition, the eCall system includes an in-band modem eCall (In-band Modem eCall) solution, a next generation eCall (Next Generation eCall, NG-eCall) solution, a telematics industry application alliance (Telematics Industry Application Alliance, TIAA) E-Call (TIAA E-Call) solution, etc. These solutions all require the support of the terrestrial public communication network, such as 2nd generation mobile communication network (2nd Generation mobile networks, 2G), 3rd generation mobile communication network (3nd Generation mobile networks, 3G), long term evolution network (long term evolution networks, LTE), 5th generation mobile communication networks (5nd Generation mobile networks, 5G), etc., and may also use satellite phone and short message services provided by satellite network service providers, to implement the emergency call of eCall.

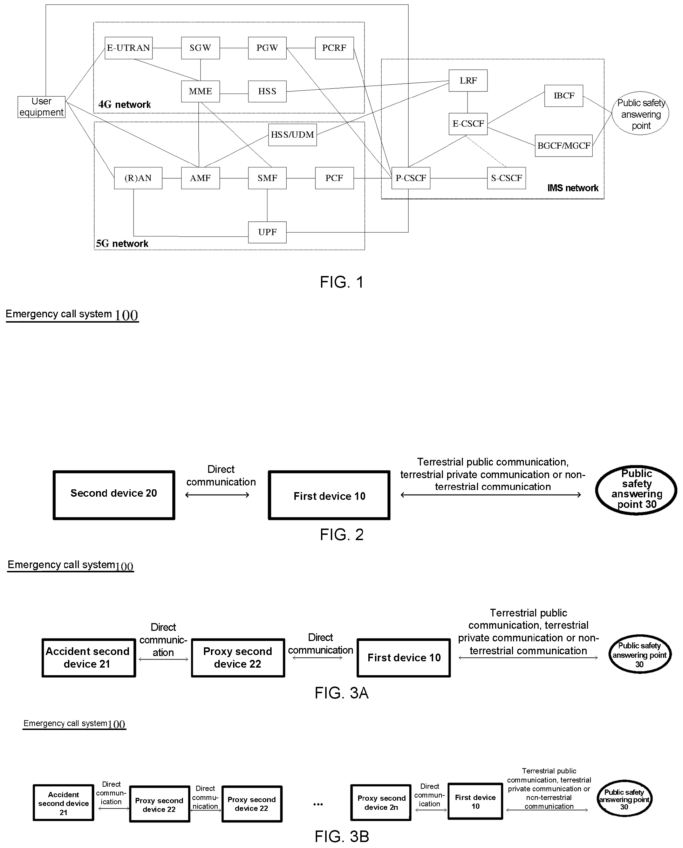

Exemplarily, as shown in FIG. 1, FIG. 1 shows an architecture diagram of an IP multimedia subsystem (IMS) emergency call system based on a 4G network and a 5G network. The system includes a user equipment, a public safety answering point, a 4G network, a 5G network, and an IMS network. As shown in FIG. 1, the user equipment requires to access the public safety answering point through the above 4G network, 5G network, and IMS network. The 4G network includes an evolved universal terrestrial radio access network (E-UTRAN) that provides radio access services for users, a serving gateway, a packet data network gateway (PGW), a policy and charging rules function (PCRF) network element, a mobility management entity (MME), a home subscriber server (HSS), etc. The 5G network includes a radio access network ((R)AN), an access and mobility management function (AMF) network element, a session management function (SMF) network element, a policy control function (PCF) network element, a user plane function (UPF) network element, a home subscriber server (HSS)/unified data management (UDM) network element, and a UDM network element. Of course, the 5G network may also include some other network elements not shown, which will not be repeated herein. The IMS network includes a location retrieval function (LRF) network element, a proxy-call session control function (P-CSCF) network element, a serving-call session control function (S-CSCF) network element, an emergency call session control function (E-CSCF) network element, an interconnection border control function (IBCF) network element, a breakout gateway control function (BGCF)/media gateway control function (MGCF) network element, etc.

However, there may be situations where the user equipment is incapable of accessing the terrestrial public communication network. For example, the user's rescue request location is in a coverage dead zone of the communication network, the network connection module of the user's rescue request device fails, or other possible situations. Since the terrestrial public communication network is not accessed, the emergency call service cannot be completed in time, thereby affecting the rescue speed of the accident vehicle and accident personnel and increasing safety risks.

In view of this, the present disclosure provides an emergency call method, applied to a first device, and the method includes: receiving a first emergency call message from a second device, where the first emergency call message is a direct communication message and carries emergency rescue request information of the second device; and sending a second emergency call to a third device, where the second emergency call is sent through a terrestrial public communication network, a terrestrial private communication network, or a non-terrestrial communication network, and carries the emergency rescue request information. Thus, the first device may receive the first emergency call message sent from the second device through direct communication, and forward the first emergency call message through a terrestrial public communication network, a terrestrial private communication network, or a non-terrestrial communication network, so as to promptly deliver a rescue request of an accident device and improve rescue speed. Thus, in a case where the second device cannot access the emergency call service, such as being in a dead zone of the terrestrial public communication network or a communication module failure, the second device may still send the rescue request information through a direct communication method, so as to complete the emergency rescue service with the assistance of the first device, thereby expanding the applicable scope of the emergency call system and improving the reliability of the emergency call service.

As shown in FIG. 2, the embodiments of the present disclosure provide an emergency call system. The emergency call system 100 includes a first device 10, a second device 20, and a public safety answering point 30. The first device 10 may access the public safety answering point 30 through a terrestrial public communication network, a terrestrial private communication network, or a non-terrestrial communication network, and the first device 10 and the second device 20 may communicate with each other through a direct communication method.

The first device 10 may be a transport vehicle device, a mobile terminal device, a roadside device (road side unit, RSU), or other devices. Transport vehicles may include vehicles such as cars, buses, subways, light rails, trams; ships such as passenger ships, cargo ships, oil tankers, fishing boats, yachts; and aircraft such as passenger aircraft, cargo aircraft, helicopters. The transport vehicle device, i.e., the first device 10, may be a terminal configured in the above transport vehicles, for example, a vehicle-mounted terminal device configured in a vehicle. The mobile terminal device may also be referred to as a terminal, a mobile station, a mobile terminal, etc. The mobile terminal device may be, for example, a mobile phone, a tablet computer, a desktop computer, a laptop computer, a handheld computer, a notebook computer, an ultra-mobile personal computer (UMPC), a netbook, etc. The roadside device may also be referred to as a roadside unit, which may communicate with vehicle-mounted devices, for example, acquiring vehicle data information through the vehicle-mounted device, is usually deployed along the road, and may cooperate with other systems, to complete vehicle traffic information processing and decision-making. The roadside device may help vehicles implement interconnection and communication, perceive the environment, improve road safety and traffic efficiency, and provide strong support for the implementation of intelligent transportation systems.

In some embodiments, the first device 10 may further have a direct communication module. The first device 10, in a case where it is incapable of accessing the terrestrial communication network or non-terrestrial communication network, may communicate with other devices through the direct communication module, for example, receiving a first emergency call message sent from the second device 20 through the direct communication method.

The direct communication module may be a cellular vehicle-to-everything (C-V2X) direct communication module and/or a dedicated short-range communication (dedicated short-range communications, DSRC) direct communication module. C-V2X technology provides comprehensive information interaction between vehicle-to-vehicle (Vehicle-to-Vehicle, V2V), vehicle-to-infrastructure (Vehicle-to-Infrastructure, V2I), vehicle-to-pedestrian (Vehicle-to-Pedestrian, V2P), and vehicle-to-network (Vehicle-to-Network, V2N). Exemplarily, the C-V2X direct communication module may be a PC5 communication module of the C-V2X. By adopting the direct communication networking method of C-V2X based on the PC5 interface, flexible and independent networking may be implemented without relying on base stations and core network infrastructure of the roadside mobile network. Therefore, in a case where the terrestrial communication network or non-terrestrial communication network cannot be accessed, communication with other devices may be performed through the PC5 communication module. Moreover, the PC5 communication technology has high maturity and low required hardware cost, and has practical value. In addition, the first device 10 may further have other similar direct communication modules, for example, modules adopting direct communication technologies such as Bluetooth, Wi-Fi direct (WFD), NearLink, ZigBee, which is not limited to the present disclosure.

The first device 10 may further include a terrestrial network communication module and/or a non-terrestrial network communication module. The terrestrial network communication module may be a cellular mobile network communication module (such as 2G/3G/4G/5G, etc.), an Ethernet communication module, a wireless local area network (wireless local area networks, WLAN) communication module, a private communication network (such as optical fiber, optical cable, etc.) communication module, etc. The non-terrestrial network communication module includes, for example, a satellite communication module, etc.

In addition, the second device 20 may also be a transport vehicle device or a mobile terminal device. In some embodiments, the second device 20 may also have a direct communication module. In a case where the terrestrial communication network or non-terrestrial communication network cannot be accessed, the second device 20 may communicate with other devices through the direct communication module, for example, the second device 20 may broadcast a first emergency call message through a direct communication method.

The direct communication module of the second device 20 may also be a C-V2X direct communication module and/or a DSRC direct communication module. Exemplarily, the second device 20 may have a PC5 communication module. In addition, the second device 20 may further have other similar direct communication modules, for example, modules adopting direct communication technologies such as Bluetooth, Wi-Fi direct, NearLink, ZigBee, which is not limited to the present disclosure. Of course, the second device 20 may also have a terrestrial network communication module and/or a non-terrestrial network communication module.

The public safety answering point 30 is a specific facility or location, which may be understood as a rescue center, and may be used to handle various emergency calls, including but not limited to fires, medical emergencies, traffic accidents, etc. The public safety answering point 30 may serve as a bridge connecting the public with emergency services, and plays a crucial role in the emergency response system.

Exemplarily, in a case where a user requires to initiate an emergency call service through the second device 20, but the second device 20 is incapable of accessing the terrestrial public communication network, terrestrial private communication network, or non-terrestrial communication network, the second device 20 may send a first emergency call message to the first device 10 through a direct communication method, so that the first device 10, when capable of accessing the terrestrial public communication network, terrestrial private communication network, or non-terrestrial communication network, accesses the public safety answering point 30, to forward the first emergency call message of the second device 20.

Of course, in a case where the second device 20 is capable of accessing the terrestrial public communication network or non-terrestrial communication network, the second device 20 may directly access the public safety answering point through the terrestrial public communication network or non-terrestrial communication network, and send the first emergency call message.

In some embodiments, the emergency call system 100 may include a plurality of second devices 20, and the plurality of second devices 20 include an accident second device and at least one proxy second device.

The accident second device may be a device that requires to initiate an emergency call service, for example, a vehicle-mounted terminal device of an accident vehicle, a mobile terminal device carried by an accident person, etc. The proxy second device may deliver the first emergency call message between the accident second device and the first device in a direct communication method until the first device receives the first emergency call message. That is, the proxy second device may broadcast the first emergency call message in a cascaded relaying manner until a certain device (i.e., the first device) enters a coverage zone of the communication network and is capable of accessing the public safety answering point, to forward the first emergency call message of the accident second device.

Exemplarily, as shown in FIG. 3A, the emergency call system 100 includes a first device 10, an accident second device 21, a proxy second device 22, and a public safety answering point 30.

In a case where a user requires to initiate an emergency call service through the accident second device 21, but the accident second device 21 is incapable of accessing the terrestrial public communication network, terrestrial private communication network, or non-terrestrial communication network, the accident second device 21 may broadcast a first emergency call message through a direct communication method. The proxy second device 22 may receive the first emergency call message.

Further, the proxy second device 22 may forward the first emergency call message to the first device 10 through the direct communication method, so that the first device 10, when capable of accessing the terrestrial public communication network, terrestrial private communication network, or non-terrestrial communication network, accesses the public safety answering point 30, to forward the first emergency call message of the accident second device 21.

Alternatively, as shown in FIG. 3B, the emergency call system 100 includes a first device 10, an accident second device 21, a proxy second device 22, a proxy second device 22, ..., a proxy second device 2n, and a public safety answering point 30.

In a case where a user requires to initiate an emergency call service through the accident second device 21, but the accident second device 21 is incapable of accessing the terrestrial public communication network, terrestrial private communication network, or non-terrestrial communication network, the accident second device 21 may broadcast a first emergency call message through the direct communication method. The proxy second device 22 may receive the first emergency call message.

Further, the proxy second device 22 may forward the first emergency call message to another proxy second device, such as a proxy second device 23, through the direct communication method. Further, the proxy second device 23 may continue to forward the first emergency call message to other proxy second devices in the direct communication method, until the proxy second device 2n forwards the first emergency call message to the first device 10 through the direct communication method, so that the first device 10, when capable of accessing the terrestrial public communication network, terrestrial private communication network, or non-terrestrial communication network, accesses the public safety answering point 30, to forward the first emergency call message of the accident second device 20.

It can be understood that, the architecture of the system shown in FIG. 2 does not constitute a limitation on the embodiments of the present disclosure, and may include more or fewer devices or components than those shown, or a combination of certain components, or a different arrangement of components.

Methods provided in the present disclosure will be introduced below in combination with the drawings of the description.

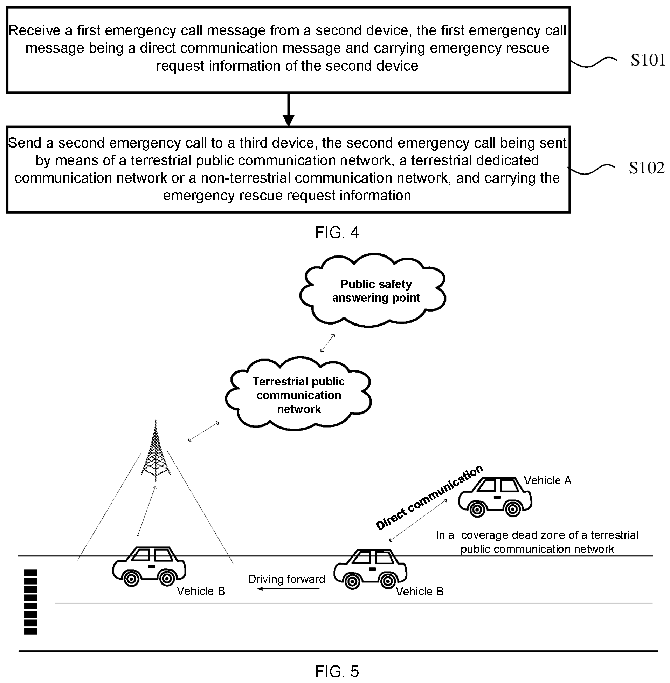

As shown in FIG. 4, the embodiments of the present disclosure provide an emergency call method, applied to a first device, and the method includes S101 to S102.

In S101, a first emergency call message is received from a second device, where the first emergency call message is a direct communication message and carries emergency rescue request information of the second device.

In some embodiments, the above emergency rescue request information includes at least one of:
a device identifier of the second device, accident location information, accident type information or to-be-rescued personnel information.

The device identifier of the second device is used to uniquely identify the second device. Exemplarily, the device identifier of the second device may be a specific mark or code, etc., of the second device, through which information such as the model, serial number, production date, manufacturer of the second device may be acquired, so as to quickly identify the type, location, and usage state, etc., of the second device.

The accident location information includes information used for describing the detailed location or zone where the accident occurs. The accident location information may be a detailed address, coordinates, etc. In an example, in a case where the user sends the first emergency call message through the second device, the accident location information may be location information of the second device.

The accident type information includes information used for describing the nature and type of the accident. For example, the accident type information may be a traffic accident, a fire, an explosion, an earthquake, etc.

The information of to-be-rescued personnel includes relevant information used for describing persons who are injured or trapped in the accident, which may include, for example, the locations, number, health conditions, and possible special rescue requirements of these persons.

It should be understood that, when an accident occurs, knowing the above emergency rescue information will help to quickly locate the accident location, speed up accident handling, and improve rescue efficiency.

In some embodiments, the first emergency call message may be a C-V2X direct communication message, a DSRC direct communication message, or other possible direct communication message sent from the second device.

Exemplarily, in a case where the second device is incapable of accessing the terrestrial communication network or non-terrestrial communication network, such as being in a coverage dead zone of the network, or a failure of the terrestrial communication module and/or the non-terrestrial communication module, and thus is incapable of accessing the emergency call service, the second device may broadcast an emergency call message, i.e., the above first emergency call message, through the direct communication method. Thus, the first device may receive the first emergency call message through the direct communication method. In some embodiments, when the first device detects a communicable device within a communication range, the emergency call message, i.e., the above first emergency call message, is broadcast through the direct communication method.

In an example, the first emergency call message may be used for requesting rescue for a transport vehicle for carrying the second device. That is, the second device is a transport vehicle device.

For example, as shown in FIG. 5, taking an example in which a transport vehicle for carrying the second device is vehicle A, the second device is a vehicle-mounted terminal device of the vehicle A. In a case where a traffic accident occurs and the vehicle A is in a coverage dead zone of the terrestrial public communication network, the second device, i.e., the vehicle-mounted terminal device of the vehicle A, may broadcast a first emergency call message, so that vehicle-mounted terminal devices of other vehicles or mobile terminal devices of personnels passing through the accident area, such as the vehicle-mounted terminal device of vehicle B or the mobile terminal devices of personnels in vehicle B in FIG. 5, may receive the first emergency call message through the direct communication method. Further, when the vehicle B drives into a coverage zone of the terrestrial public communication network, the first emergency call message may be forwarded to the public safety answering point through the terrestrial public mobile communication network, to help the second device request rescue.

In some embodiments, the first emergency call message is used for requesting rescue for a transport vehicle for carrying the second device. In addition to the device identifier of the second device, the accident location information, the accident type information, and the information of to-be-rescued personnel, the emergency rescue request information further includes at least one of:
a vehicle identifier of the transport vehicle for carrying the second device, vehicle state information, vehicle power information, an emergency call trigger type, vehicle trajectory information before the accident occurs, vehicle speed information before the accident occurs, or information of a number of occupants in the vehicle.

The vehicle identifier of the transport vehicle for carrying the second device is used to uniquely identify the transport vehicle. Taking an example in which the transport vehicle is a vehicle, the vehicle identifier of the vehicle may be a license plate number of the vehicle or other information that may uniquely identify the vehicle.

The vehicle state information may include a working state, used for describing the transport vehicle for carrying the second device, such as throttle, brake, steering, acceleration, tire pressure states of the vehicle, etc.

The vehicle power information may include information used for describing a power system or a power type of the transport vehicle for carrying the second device, such as fuel power drive, electric power drive, hybrid power drive, engine displacement, motor power, power battery voltage and capacity, etc. In some embodiments, the vehicle power information may further include power-related information such as fuel/power, engine/motor state.

The emergency call trigger type may include information used for describing a reason or a type that triggers the emergency call system of the transport vehicle for carrying the second device, such as collision accident triggering, driver emergency braking triggering, automatic vehicle failure triggering, occupant manual triggering, etc.

The vehicle trajectory information before the accident occurs may include information used for describing a movement path record and a location change record of the transport vehicle for carrying the second device. For example, driving route information of the vehicle within a period of time before the accident occurs recorded by a global positioning system (GPS) or other positioning technologies, and action information such as turning, accelerating, decelerating of the vehicle within the period of time may further be included.

The vehicle speed information before the accident occurs may include a speed magnitude, etc., of the transport vehicle for carrying the second device before the accident occurs.

The information of the number of occupants in the vehicle may include a total number of passengers and a driver on the transport vehicle for carrying the second device.

It should be understood that, the above emergency rescue information is also crucial for emergency rescue. When an accident occurs, the severity of the accident may be quickly assessed based on the emergency rescue information, and a reasonable rescue plan and response measures may be quickly formulated, thereby reducing casualties and property losses. In addition, the above emergency rescue information may also provide strong decision support for traffic management departments, which helps to improve the overall operation efficiency and safety of the traffic system.

In another example, the first emergency call message may be used for requesting personnel for carrying the second device. That is, the second device is a mobile terminal device.

For example, when a hiker gets lost in a coverage dead zone of the terrestrial public communication network, such as in a remote sparsely populated mountainous areas, deserts, and plateau area, the hiker may broadcast the above first emergency call message through a carried mobile terminal device, such as a mobile phone, so that other devices located nearby may receive the first emergency call message through the direct communication method. Further, the other devices, when entering a coverage zone of the terrestrial public communication network or the non-terrestrial communication network, may forward the first emergency call message to the public safety answering point through the terrestrial public mobile communication network or the non-terrestrial communication network, so as to help the second device request rescue. In some embodiments, rescue personnels, after receiving the rescue task, may search for the first emergency call signal transmitted through the direct communication within the dead zone, so as to quickly locate the hiker.

In yet another example, in a case where natural disasters such as earthquakes, floods, and storms, occur and public communication facilities are completely destroyed, the terrestrial public communication network cannot be normally used. In this case, to-be-rescued personnels in the disaster zone may also broadcast the above first emergency call message through a carried mobile terminal device such as a mobile phone, so that nearby rescue devices (such as drones, rescue vehicles) may receive the first emergency call message through the direct communication method. These rescue devices, upon accessing the terrestrial public communication network (for example, near an emergency communication support vehicle) or the non-terrestrial communication network (for example, a satellite network), forward the first emergency call message to the rescue center collectively . In some embodiments, rescue devices such as drones and rescue vehicles may also search for the first emergency call signal transmitted through the direct communication, to quickly locate to-be-rescued personnels.

In some embodiments, the second device includes an accident second device and at least one proxy second device. The first device may receive a first emergency call message from a proxy second device, the first emergency call message is generated based on a direct communication message for emergency call sent from the accident second device, and carries emergency rescue request information of the accident second device.

Exemplarily, taking an example in which a transport vehicle for carrying the accident second device is a vehicle, the accident second device is a vehicle-mounted terminal device of the vehicle. In a case where a traffic accident occurs and the vehicle is in a coverage dead zone of the terrestrial public communication network, the accident second device may broadcast the first emergency call message, so that vehicle-mounted terminal devices of other vehicles or mobile terminal devices of personnels passing through the accident zone, i.e., the proxy second devices, receive the first emergency call message through the direct communication method. Further, the proxy second device may forward the first emergency call message to the first device through the direct communication method. The first device, upon driving into a coverage zone of the terrestrial public communication network, may forward the first emergency call message to the public safety answering point through the terrestrial public mobile communication network, to help the accident second device request rescue.

In some embodiments, the proxy second device or the first device may also refuse to forward the first emergency call message. In this case, the accident second device may continuously broadcast the first emergency call message, so that other proxy second devices agree to forward the first emergency call message of the accident second device.

Alternatively, the proxy second device or the first device may be preset to agree to forward the first emergency call message.

Yet alternatively, the proxy second device or the first device may determine whether to forward the first emergency call message according to selection of a user.

In some embodiments, the proxy second device or the first device may further send a feedback message to the second device, where the feedback message is used to feedback that the first device agrees to assist in sending the emergency rescue request information of the second device. Alternatively, the feedback message is used to feedback that the first device refuses to assist in sending the emergency rescue request information of the second device.

In S102, a second emergency call is sent to a third device, where the second emergency call is sent through a terrestrial public communication network, a terrestrial private communication network, or a non-terrestrial communication network, and carries the emergency rescue request information.

Exemplarily, the first device, upon accessing the terrestrial public communication network or the satellite communication network, may send a second emergency call to the third device through the terrestrial public communication network or the satellite communication network, and the second emergency call may be a voice emergency call or an emergency call short message. Alternatively, the first device is a roadside device, the first device accesses the terrestrial private communication network, and may send the second emergency call to the third device through the terrestrial private communication network. In this case, the second emergency call may be the emergency call short message.

In some embodiments, in addition to the above emergency rescue request information, the second emergency call further carries at least one of:
a device identifier of the first device, location information of the first device, user contact information of the first device, a vehicle identifier of a transport vehicle for carrying the first device, or identification information of the accident state by the first device.

The device identifier of the first device is used to uniquely identify the first device. Exemplarily, the device identifier of the first device may be a specific mark or code, etc., of the first device, through which information such as the model, serial number, production date, manufacturer of the first device may be acquired, so as to quickly identify the type, location, and usage state of the first device.

The location information of the first device includes information used for describing the detailed location or area where the first device is located.

The user contact information of the first device may include a contact information of the user associated with the device. For example, taking an example in which the transport vehicle for carrying the first device is a vehicle, the user contact information of the first device may include a mobile phone number of a vehicle owner. Alternatively, taking an example in which the first device is a mobile terminal device, the user contact information of the first device may be a mobile phone number of a user of the mobile terminal device.

The vehicle identifier of the transport vehicle for carrying the first device is used to uniquely identify the transport vehicle. Taking an example in which the transport vehicle is a vehicle, the vehicle identifier of the vehicle may be a license plate number of the vehicle or other information that may uniquely identify the vehicle.

The identification information of the accident state by the first device may be relevant information that the first device, after receiving the first emergency call message, identifies the current accident state and has verified the first emergency call message. For example, information such as the accident environment and personnel situation identified by the first device.

In some embodiments, the second emergency call may be used to establish a voice call for an emergency call, or the second emergency call is a message for transmitting data for carrying a rescue request.

In some embodiments, the third device may be a communication device of a public safety answering point.

In some embodiments, the first device includes a transport vehicle device, a mobile terminal device, or a roadside device.

In addition, in a case where the first device is the transport vehicle device or mobile terminal device, the second emergency call is sent through the terrestrial public communication network or a non-terrestrial communication network. In a case where the first device is the roadside device, the second emergency call is sent through the terrestrial private communication network.

In an implementation, in a case where the first device is the transport vehicle device or mobile terminal device, the first device may detect a communication network connection of the first device. Further, the first device, in response to detecting that the first device has successfully accessed the terrestrial public communication network or the non-terrestrial communication network, sends the second emergency call to the third device.

Exemplarily, the first device is the transport vehicle device or the mobile terminal device, and the first device has a terrestrial public communication function. In this case, the second emergency call may be sent through the terrestrial public communication network. Alternatively, the first device has a non-terrestrial communication function. In this case, the second emergency call may be sent through the non-terrestrial communication network. Yet alternatively, the first device has both terrestrial public communication and non-terrestrial communication function. In this case, the second emergency call may be sent through the terrestrial public communication network or the non-terrestrial communication network.

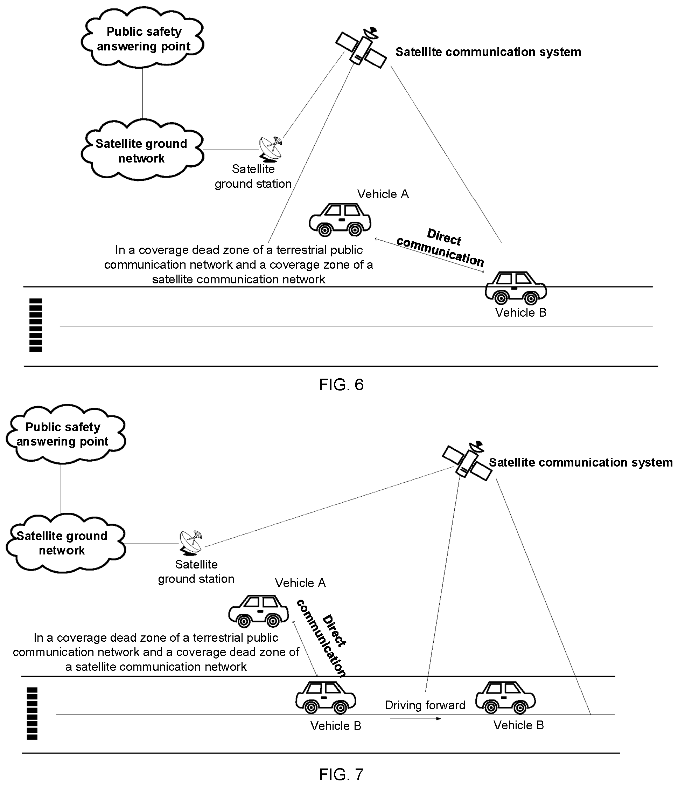

In an example, as shown in FIG. 6, taking an example in which the transport vehicle for carrying the second device is vehicle A, vehicle A is in a coverage dead zone of the terrestrial public communication network and a coverage zone of the satellite communication network, but vehicle A is not configured with a satellite communication module, and vehicle B is configured with a satellite communication module. In this case, the vehicle-mounted terminal device of the vehicle A may broadcast a first emergency call message. The vehicle-mounted terminal device of the vehicle B, when receiving the first emergency call message through the direct communication method, may directly forward the first emergency call message to the public safety answering point through the satellite network, to help the second device request rescue.

Alternatively, as shown in FIG. 7, the vehicle A is in a coverage dead zone of the terrestrial public communication network and a coverage dead zone of the satellite communication network. Thus, in a case where the vehicle-mounted terminal device of the vehicle B, receives the first emergency call message through the direct communication method, the vehicle-mounted terminal device of the vehicle B, upon driving into a coverage zone of the satellite communication network, may forward the first emergency call message to the public safety answering point through the satellite network, to help the second device request rescue.

Yet alternatively, the vehicle B is configured with a satellite communication module and a terrestrial public communication module. Thus, the vehicle B may forward the first emergency call message to the public safety answering point through the satellite network or the terrestrial public communication network, to help the second device request rescue.

In some embodiments, in a case where the first device has both a terrestrial public communication function and a non-terrestrial communication function, the second emergency call may be sent based on the communication network that the first device accesses first. For example, after the first device leaves the accident area, the first device first enters a coverage zone of the terrestrial public communication, and the zone is not covered by a non-terrestrial communication network. In this case, the first device may send the second emergency call through the terrestrial public communication network.

Alternatively, in a case where the first device enters a coverage zone of the terrestrial public communication and the zone is covered by the non-terrestrial communication network, the first device may send the second emergency call through the terrestrial public communication network or the non-terrestrial communication network.

In an example, in a case where the first device enters a coverage zone of the terrestrial public communication and the zone is covered by the non-terrestrial communication network, the first device may send the second emergency call through the terrestrial public communication network. It should be understood that, compared with the non-terrestrial communication network, directly sending the second emergency call through the terrestrial public communication network, the cost of sending the second emergency call may be reduced.

In another example, the first device may receive a selection instruction, and then send the second emergency call to the third device through the communication network indicated by the selection instruction. The selection instruction is used for indicating the communication network adopted for sending the second emergency call, and the communication network is the terrestrial public communication network or the non-terrestrial communication network. It should be understood that, the selection instruction may be input by a user, and the communication network for the second emergency call may be selected by the user independently.

In another implementation, the first device is a roadside device, and the first device may send the second emergency call to the third device through the terrestrial private communication network.

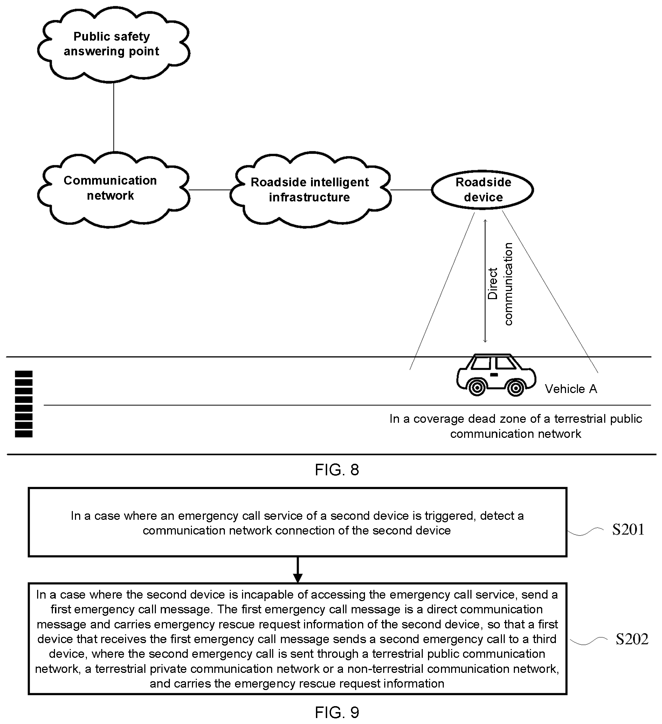

Exemplarily, as shown in FIG. 8, taking an example in which the transport vehicle for carrying the second device is vehicle A, the second device is a vehicle-mounted terminal device of the vehicle A. In a case where a traffic accident occurs and the vehicle A is in a coverage dead zone of the terrestrial public communication network, the second device, i.e., the vehicle-mounted terminal device of the vehicle A, may broadcast a first emergency call message. A roadside device C may receive the first emergency call message through the direct communication method, and then forward the first emergency call message to the public safety answering point through the terrestrial private communication network, to help the second device request rescue.

It should be noted that, since the roadside device is usually erected by a highway department, the roadside device is connected to the network of a highway system through a fixed communication network (such as optical fiber), that is, the roadside device has a terrestrial private communication function. In this case, the second emergency call is sent through the terrestrial private communication network. Communication between the roadside device and roadside infrastructure is usually performed through optical fibers, cables, and routing switching/transmission devices, and the terrestrial private communication network is a private network within the highway department, which may be used by the roadside device. In this case, if the roadside system of the highway department may provide a proxy emergency call function, the roadside device, after receiving the first emergency call message, may initiate an emergency call through the roadside system proxy, that is, send the second emergency call. Alternatively, if the roadside system of the highway department does not provide a proxy emergency call function, the roadside device may directly send the second emergency call through the terrestrial private communication network.

In a case where the first device is a roadside device, the second emergency call may be a message for transmitting data carrying a rescue request.

Based on the technical solutions provided by the present disclosure, the first device may receive the first emergency call message sent from the second device through direct communication, and forward the first emergency call message through the terrestrial public communication network, the terrestrial private communication network, or the non-terrestrial communication network, so as to promptly deliver the rescue request of the accident device and improve rescue speed. Thus, in a case where the second device cannot access the emergency call service, such as being in a dead zone of the terrestrial public communication network or a communication module failure, the second device may still send the rescue request information through a direct communication method, so as to complete the emergency rescue service with the assistance of the first device, thereby expanding the applicable scope of the emergency call system and improving the reliability of the emergency call service.

In some embodiments, the present disclosure further provides another emergency call method, and the method is applied to a second device. As shown in FIG. 9, the method includes S201 to S202.

In S201, in a case where an emergency call service of the second device is triggered, a communication network connection of the second device is detected.

In some embodiments, the second device is a transport vehicle device or a mobile terminal device.

In some embodiments, the emergency rescue request information includes at least one of:
a device identifier of the second device, accident location information, accident type information, or to-be-rescued personnel information.

In some embodiments, the first emergency call message is used to request rescue for a transport vehicle for carrying the second device, and the emergency rescue request information further includes at least one of:
a vehicle identifier of the transport vehicle for carrying the second device, vehicle state information, vehicle power information, an emergency call trigger type, vehicle trajectory information before the accident occurs, vehicle speed information before the accident occurs, or information of a number of occupants in the vehicle.

In S202, in a case where the second device is incapable of accessing an emergency call service, a first emergency call message is sent. The first emergency call message is a direct communication message and carries emergency rescue request information of the second device, so that a first device that receives the first emergency call message sends a second emergency call to a third device, where the second emergency call is sent through a terrestrial public communication network, a terrestrial private communication network, or a non-terrestrial communication network, and carries the emergency rescue request information.

In some embodiments, the second emergency call further carries at least one of:
a device identifier of the first device, location information of the first device, user contact information of the first device, a vehicle identifier of a transport vehicle for carrying the first device, or identification information of the accident state by the first device.

In some embodiments, the second device may receive a feedback message from the first device. Further, in a case where the feedback message is used to feedback that the first device agrees to assist in sending the emergency rescue request information of the second device, sending the first emergency call message is stopped.

Alternatively, in a case where the feedback message is used to feedback that the first device refuses to assist in sending the emergency rescue request information of the second device, the first emergency call message is continuously sent.

In some embodiments, in a case where the feedback message from the first device is not received, the second device may continuously send the first emergency call message, where the feedback message is used to feedback whether the first device agrees to assist in sending the emergency rescue request information of the second device.

In some embodiments, the second device includes an accident second device and at least one proxy second device. In a case where the accident second device is incapable of accessing the emergency call service, the accident second device may send a direct communication message for emergency call to the proxy second device, so that the proxy second device sends a first emergency call message, where the first emergency call message carries emergency rescue request information of the accident second device.

In addition, for a detailed description of S201 to S202, reference may also be made to the relevant description of the above S101 to S102, which will not be repeated herein.

Based on the technical solutions provided by the present disclosure, the second device, in a case where it is incapable of accessing the emergency call service such as being in a dead zone of the communication network or a communication module failure, may send the rescue request information through the direct communication method, so as to complete the emergency rescue service with the assistance of other devices, thereby expanding the applicable scope of the emergency call system and improving the accessibility and reliability of the emergency call service.

The above introduces the solutions provided in the present disclosure mainly from the perspective of interaction between various devices or nodes. It can be understood that, in order to implement the above functions, various devices or nodes contains corresponding hardware structures and/or software modules for executing various functions. Those skilled in the art should easily realize that, in conjunction with the exemplary algorithm steps described in the embodiments disclosed herein, the present disclosure can be implemented in the form of hardware or a combination of hardware and computer software. Those skilled in the art should easily realize that, in conjunction with the exemplary algorithm steps described in the embodiments disclosed herein, the present disclosure can be implemented in the form of hardware or a combination of hardware and computer software. Professional technicians may use different methods to implement the described functions for each specific application, but such an implementation should not be considered beyond the scope of the present disclosure.

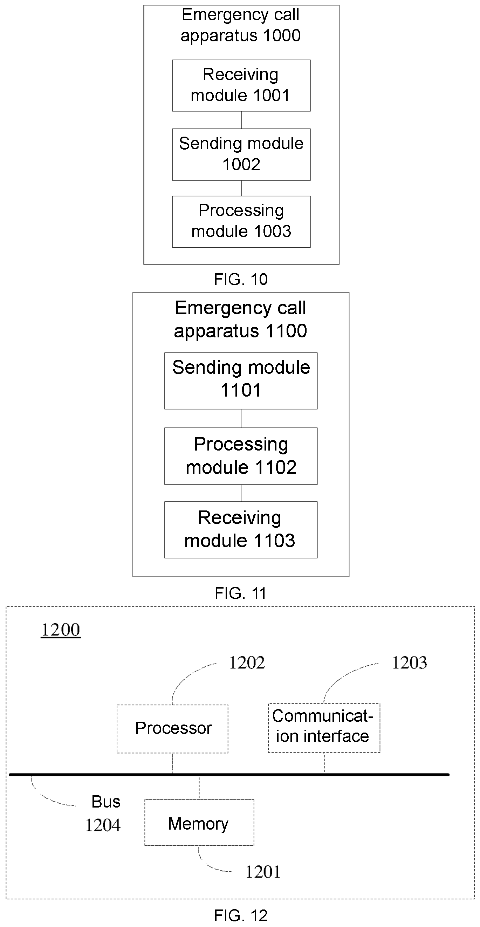

FIG. 10 is a schematic diagram of components of an emergency call apparatus according to some embodiments. As shown in FIG. 10, the emergency call apparatus 1000 includes a receiving module 1001 and a sending module 1002. In some embodiments, the emergency call apparatus 1000 may further include a processing module 1003.

The receiving module 1001, is configured to receive a first emergency call message from a second device, where the first emergency call message is a direct communication message and carries emergency rescue request information of the second device; and
the sending module 1002, is configured to send a second emergency call to a third device, where the second emergency call is sent through a terrestrial public communication network, a terrestrial private communication network, or a non-terrestrial communication network, and carries the emergency rescue request information.

In some embodiments, the emergency rescue request information includes at least one of: a device identifier of the second device, accident location information, accident type information, and to-be-rescued personnel information.

In some embodiments, the first emergency call message is used to request rescue for a transport vehicle for carrying the second device, and the emergency rescue request information further includes at least one of: a vehicle identifier of the transport vehicle for carrying the second device, vehicle state information, vehicle power information, an emergency call trigger type, vehicle trajectory information before an accident occurs, vehicle speed information before the accident occurs, or information of a number of occupants in the vehicle.

In some embodiments, the second emergency call further carries at least one of: a device identifier of the first device, location information of the first device, user contact information of the first device, a vehicle identifier of a transport vehicle for carrying the first device, or identification information of an accident state by the first device.

In some embodiments, the first device includes a transport vehicle device, a mobile terminal device, or a roadside device. In a case where the first device is a transport vehicle device or a mobile terminal device, the second emergency call is sent through a terrestrial public communication network or a non-terrestrial communication network; in a case where the first device is a roadside device, the second emergency call is sent through a terrestrial private communication network.

In some embodiments, the processing module 1003, is configured to detect a communication network connection of the first device. The sending module 1002, is configured to, in response to detecting that the first device has successfully accessed the terrestrial public communication network or the non-terrestrial communication network, send the second emergency call to the third device.

In some embodiments, the receiving module 1001, is configured to receive a selection instruction, where the selection instruction is used to indicate a communication network adopted for sending the second emergency call, and the communication network is the terrestrial public communication network or the non-terrestrial communication network. The sending module 1002, is configured to send the second emergency call to the third device through the communication network indicated by the selection instruction.

In some embodiments, the second device includes an accident second device and at least one proxy second device; the receiving module, is configured to receive a first emergency call message from a proxy second device, where the first emergency call message is generated based on a direct communication message for emergency call sent from the accident second device, and carries emergency rescue request information of the accident second device.

In some embodiments, the sending module 1002, is further configured to send a feedback message to the second device, where the feedback message is used to feedback that the first device agrees to assist in sending the emergency rescue request information of the second device.

In some embodiments, the emergency call apparatus 1000 has a cellular vehicle-to-everything (C-V2X) direct communication module and/or a dedicated short-range communication (DSRC) direct communication module.

For more detailed descriptions of the above receiving module 1001, processing module 1003, and sending module 1002, and more detailed descriptions of various technical features and descriptions of beneficial effects, etc., references may be made to the above corresponding method embodiment parts, which will not be repeated herein.

FIG. 11 is a schematic diagram of components of another emergency call apparatus according to some embodiments. As shown in FIG. 11, the emergency call apparatus 1100 is applied to a user equipment and includes a sending module 1101 and a processing module 1102. In some embodiments, the emergency call apparatus 1100 further includes a receiving module 1103.

The processing module 1102, is configured to, in a case where an emergency call service of the second device is triggered, detect a communication network connection of the second device; and
the sending module 1101, is configured to, in a case where the second device is incapable of accessing an emergency call service, send a first emergency call message; where the first emergency call message is a direct communication message and carries emergency rescue request information of the second device.

In some embodiments, the emergency rescue request information includes at least one of: a device identifier of the second device, accident location information, accident type information, or to-be-rescued personnel information.

In some embodiments, the first emergency call message is used to request rescue for a transport vehicle for carrying the second device, and the emergency rescue request information further includes at least one of: a vehicle identifier of the transport vehicle for carrying the second device, vehicle state information, vehicle power information, an emergency call trigger type, vehicle trajectory information before the accident occurs, vehicle speed information before the accident occurs, or information of a number of occupants in the vehicle.

In some embodiments, the receiving module 1103, is configured to receive a feedback message from the first device. The sending module 1101, is configured to, in a case where the feedback message is used to feedback that the first device agrees to assist in sending the emergency rescue request information of the second device, stop sending the first emergency call message; and in a case where the feedback message is used to feedback that the first device refuses to assist in sending the emergency rescue request information of the second device, continuously send the first emergency call message.

In some embodiments, the sending module 1101, is configured to, in a case where the feedback message from the first device is not received, continuously send the first emergency call message, where the feedback message is used to feedback whether the first device agrees to assist in sending the emergency rescue request information of the second device.

In some embodiments, the second device includes an accident second device and at least one proxy second device. The sending module, is configured to, in a case where the accident second device is incapable of accessing the emergency call service, send a direct communication message for emergency call to the proxy second device, to enable the proxy second device to send the first emergency call message, and the first emergency call message carries emergency rescue request information of the accident second device.

In some embodiments, the second device is a transport vehicle device or a mobile terminal device.

In some embodiments, the second device has a C-V2X direct communication module and/or a DSRC direct communication module.

For more detailed descriptions of the above sending module 1101, processing module 1102, and receiving module 1103, and more detailed descriptions of various technical features and descriptions of beneficial effects, references may be made to the corresponding method embodiment parts above, which will not be repeated herein.

It should be noted that, the modules in FIG. 10 or FIG. 11 may also be referred to as units and for example, the sending module may be referred to as a sending unit. In addition, in the embodiments shown in FIG. 10 or FIG. 11, the names of various modules may not be the names shown in the figures and for example, the sending module may also be referred to as a communication module, and the receiving module may also be referred to as a communication module.

If the respective units or modules in FIG. 10 or FIG. 11 are implemented in the form of a software functional module, and sold or used as an independent product, the respective units may be stored in a computer readable storage medium. Based on this understanding, the technical solutions of the embodiments of the present disclosure may be essentially, or a part of the technical solutions that contributes to the existing technology, or all or a part of the technical solutions, may be embodied in the form of a software product, and the computer software product is stored in a storage medium, and includes a plurality of instructions to cause a computer device (which may be a personal computer, a server, or a network device, etc.) or processor to perform all or a part of the steps of the methods of various embodiments of the present disclosure. The storage medium storing the computer software product includes various types of medium capable of storing program codes, such as a U disk (USB flash disk), a mobile hard disk, a read-only memory (ROM), a random access memory (RAM), a magnetic disk, or an optical disk.

In a case where the functions of the above integrated modules are implemented in the form of hardware, the embodiments of the present disclosure provide a structural schematic diagram of an emergency call apparatus. The communication apparatus may be the above emergency call apparatus 1000 or emergency call apparatus 1100. As shown in FIG. 12, the emergency call apparatus 1200 includes: a processor 1202, a communication interface 1203, and a bus 1204. In some embodiments, the emergency call apparatus 1200 may further include a memory 1201.

The processor 1202 may implement or perform various exemplary logical blocks, modules and circuits described in conjunction with the content disclosed in the present disclosure. The processor 1202 may be a central processing unit, a general-purpose processor, a digital signal processor, an application specific integrated circuit, a field programmable gate array or other programmable logic devices, a transistor logic device, a hardware component or any combination thereof. The processor 1202 may implement or perform various exemplary logical blocks, modules and circuits described in conjunction with the content disclosed in the present disclosure. The processor 1202 may also be a combination that implements computing functions, for example, including a combination of one or more microprocessors, a combination of a digital signal processor (DSP) and a microprocessor, or the like.

The communication interface 1203 is configured to connect with other devices via a communication network. The communication network may be a cellular mobile communication network interface (such as 2G/3G/4G/5G, etc.), a non-terrestrial communication network interface (such as a satellite communication interface, etc.), a direct communication interface (C-V2X cellular direct communication and/or DSRC direct communication interface, etc.), Ethernet, a wireless local area network (wireless local area networks, WLAN), Bluetooth, NearLink, etc.

The memory 1201 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 1201 may exist independently of the processor 1202, and the memory 1201 may be connected to the processor 1202 via the bus 1204 and is used for storing instructions or program codes. The processor 1202, upon calling and executing the instructions or program codes stored in the memory 1201, is capable of implementing the information processing mode determining method provided in the embodiments of the present disclosure.

As another implementation manner, the memory 1201 may also be integrated with the processor 1202.

The bus 1204 may be an extended industry standard architecture (EISA) bus, etc. Buses 1204 may be divided into address buses, data buses, control buses, and the like. For the convenience of representation, only one thick line is used in FIG. 12 for representation, but it does not mean that there is only one bus or one type of bus.

From the description of the above embodiments, those skilled in the art can clearly understand that, for convenience and brevity of description, an illustration is only given by the division of functional modules above. In practical applications, the above functions may be allocated to be completed by different functional modules according to requirements. That is, the internal structure of the device or apparatus is divided into different functional modules to complete all or a part of the functions described above.

The embodiments of the present disclosure further provide a computer readable storage medium. All or a part of the procedures in the above method embodiments may be completed by related hardware indicated by computer instructions, and the program may be stored in the above computer readable storage medium. The program, upon being executed, may include the procedures of the above method embodiments. The computer readable storage medium may be or a memory of any one of the above embodiments. The above computer readable storage medium may also be an external storage device of the above device or apparatus, e.g., a plug-in hard disk, a smart memory card (smart media card, SMC), a secure digital (SD) card, a flash card, etc., equipped on the above device or apparatus. Furthermore, the above computer readable storage medium may include both an internal storage unit and an external storage device of the above device or apparatus. The above computer readable storage medium is configured to store the above computer program and other programs and data required for the above device or apparatus. The above computer readable storage medium may also be configured to temporarily store data that has been output or is to be output. The readable storage medium includes a non-transitory computer readable storage medium.

The embodiments of the present disclosure further provide a computer program product, the computer product contains a computer program, the computer program product, upon being executed on a computer, enables the computer to perform any one of the methods provided in the above embodiments.

The embodiments of the present disclosure further provide a transport vehicle device. The transport vehicle device has a C-V2X direct communication module and/or a DSRC direct communication module, and is configured to perform the above emergency call method.

The embodiments of the present disclosure provide a mobile terminal device. The mobile terminal device has a C-V2X direct communication module and/or a DSRC direct communication module, and is configured to perform the above emergency call method.

The embodiments of the present disclosure provide a roadside device. The roadside device has a C-V2X direct communication module and/or a DSRC direct communication module, and is configured to perform the above emergency call method.

Although the present disclosure is described herein in conjunction with various embodiments, other variations of the disclosed embodiments may be understood and implemented by those skilled in the art by viewing the drawings, the disclosed content, and the appended claims, during implementing the claimed present disclosure. In the claims, the word "comprise/comprises/comprising" does not exclude other components or steps, and "a/an" or "one" does not exclude multiple cases. A single processor or other unit may implement functions of several items listed in the claims. A fact that some measures are documented in dependent claims different from each other does not mean that these measures cannot be combined to exert a good effect.

Although the present disclosure is described in conjunction with the features and embodiments thereof, it is apparent that various modifications and combinations may be made thereto without departing from the spirit and scope of the present disclosure. Accordingly, the specification and drawings are merely exemplary explanation of the present disclosure as defined by the attached claims and are deemed to cover any and all modifications, variations, combinations or equivalents within the scope of the present disclosure. Obviously, those skilled in the art may make various changes and variations to the present disclosure without departing from the spirit and scope of the present disclosure. In this way, if these modifications and variants of the present disclosure fall within the scope of the claims of the present disclosure and their equivalent technologies, the present disclosure is also intended to contain these modifications and variants.

The above descriptions are only specific implementations of the present disclosure, but the protection scope of the present disclosure is not limited thereto, any variations or replacements within the technical scope disclosed in the present disclosure shall be included in the protection scope of the present disclosure. Therefore, the protection scope of the present disclosure shall be determined based on the protection scope of the claims.

## Claims

1. An emergency call method, **characterized in that** the method is performed by a first device and comprises:
receiving a first emergency call message from a second device, wherein the first emergency call message is a direct communication message and carries emergency rescue request information of the second device; and
sending a second emergency call to a third device, wherein the second emergency call is sent through a terrestrial public communication network, a terrestrial private communication network, or a non-terrestrial communication network, and carries the emergency rescue request information.

2. The method according to claim 1, wherein the emergency rescue request information comprises at least one of:
a device identifier of the second device, accident location information, accident type information or to-be-rescued personnel information.

3. The method according to any one of claims 1 to 2, wherein the first emergency call message is used to request rescue for a transport vehicle for carrying the second device, and the emergency rescue request information further comprises at least one of:
a vehicle identifier of the transport vehicle for carrying the second device, vehicle state information, vehicle power information, an emergency call trigger type, vehicle trajectory information before an accident occurs, vehicle speed information before an accident occurs or information of a number of occupants in the vehicle.

4. The method according to any one of claims 1 to 3, wherein the second emergency call further carries at least one of:
a device identifier of the first device, location information of the first device, user contact information of the first device, a vehicle identifier of a transport vehicle for carrying the first device or identification information of an accident state by the first device.

5. The method according to any one of claims 1 to 4, wherein the first device comprises a transport vehicle device, a mobile terminal device, or a roadside device;
in a case where the first device is the transport vehicle device or the mobile terminal device, the second emergency call is sent through a terrestrial public communication network or a non-terrestrial communication network; or
in a case where the first device is the roadside device, the second emergency call is sent through a terrestrial private communication network.

6. The method according to claim 5, wherein, in a case where the first device is the transport vehicle device or the mobile terminal device, sending the second emergency call to the third device comprises:
detecting a communication network connection of the first device; and
in response to detecting that the first device has successfully accessed the terrestrial public communication network or the non-terrestrial communication network, sending the second emergency call to the third device.

7. The method according to claim 6, wherein sending the second emergency call to the third device comprises:
receiving a selection instruction, wherein the selection instruction is used to indicate a communication network adopted for sending the second emergency call, and the communication network is the terrestrial public communication network or the non-terrestrial communication network; and
sending the second emergency call to the third device through the communication network indicated by the selection instruction.

8. The method according to any one of claims 1 to 7, wherein the second device comprises an accident second device and at least one proxy second device;
receiving the first emergency call message from the second device comprises:
receiving the first emergency call message from the at least one proxy second device, wherein the first emergency call message is generated based on a direct communication message for emergency call sent from the accident second device, and carries emergency rescue request information of the accident second device.

9. The method according to any one of claims 1 to 8, further comprising:
sending a feedback message to the second device, wherein the feedback message is used to feedback that the first device agrees to assist in sending the emergency rescue request information of the second device.

10. The method according to any one of claims 1 to 9, wherein the first device has a cellular vehicle-to-everything (C-V2X) direct communication module and/or a dedicated short-range communication (DSRC) direct communication module.

11. An emergency call method, **characterized in that** the method is performed by a second device and comprises:
in a case where an emergency call service of the second device is triggered, detecting a communication network connection of the second device; and
in a case where the second device is incapable of accessing the emergency call service, sending a first emergency call message; wherein the first emergency call message is a direct communication message and carries emergency rescue request information of the second device.

12. The method according to claim 11, wherein the emergency rescue request information comprises at least one of:
a device identifier of the second device, accident location information, accident type information or to-be-rescued personnel information.

13. The method according to any one of claims 11 to 12, wherein the first emergency call message is used to request rescue for a transport vehicle for carrying the second device, and the emergency rescue request information further comprises at least one of:
a vehicle identifier of the transport vehicle for carrying the second device, vehicle state information, vehicle power information, an emergency call trigger type, vehicle trajectory information before an accident occurs, vehicle speed information before the accident occurs or information of a number of occupants in the vehicle.

14. The method according to any one of claims 11 to 13, further comprising:
receiving a feedback message from a first device;
in a case where the feedback message is used to feedback that the first device agrees to assist in sending the emergency rescue request information of the second device, stopping sending the first emergency call message; and
in a case where the feedback message is used to feedback that the first device refuses to assist in sending the emergency rescue request information of the second device, continuously sending the first emergency call message.

15. The method according to any one of claims 11 to 14, further comprising:
in a case where a feedback message from the first device is not received, continuously sending the first emergency call message, wherein the feedback message is used to feedback whether the first device agrees to assist in sending the emergency rescue request information of the second device.

16. The method according to any one of claims 11 to 15, wherein the second device comprises an accident second device and at least one proxy second device, and in a case where the second device is incapable of accessing the emergency call service, sending the first emergency call message comprises:
in a case where the accident second device is incapable of accessing the emergency call service, sending a direct communication message for emergency call to the at least one proxy second device, to enable the at least one proxy second device to send the first emergency call message, and the first emergency call message carries the emergency rescue request information of the accident second device.

17. The method according to any one of claims 11 to 16, wherein the second device is a transport vehicle device or a mobile terminal device.

18. The method according to any one of claims 11 to 17, wherein the second device has a C-V2X direct communication module and/or a DSRC direct communication module.

19. A transport vehicle device, wherein the transport vehicle device has a C-V2X direct communication module and/or a DSRC direct communication module, and the transport vehicle device is configured to perform the emergency call method according to any one of claims 1 to 10 and 11 to 18.

20. A mobile terminal device, wherein the mobile terminal device has a C-V2X direct communication module and/or a DSRC direct communication module, and the mobile terminal device is configured to perform the emergency call method according to any one of claims 1 to 10 and 11 to 18.

21. A roadside device, wherein the roadside device has a C-V2X direct communication module and/or a DSRC direct communication module, and the roadside device is configured to perform the emergency call method according to any one of claims 1 to 10 and 11 to 18.

22. A computer readable storage medium, **characterized in that** the computer readable storage medium has stored a computer program thereon, and the computer program, upon being executed by a processor, implements the emergency call method according to any one of claims 1 to 18.
